# EUROPEAN PATENT SPECIFICATION

(11) **EP 1 299 997 B1**
(45) Date of publication and mention of the grant of the patent: **08.09.2004**
(21) Application number: 01958096.8
(22) Date of filing: 10.07.2001
(51) Int. Cl.: H04M 15/04

(54) **ARRANGING OF BILLING IN A TELECOMMUNICATION SYSTEM**
ANORDNUNG ZUR GEBÜHRENBERECHNUNG IN EINEM TELEKOMMUNIKATIONSSYSTEM
ORGANISATION DE FACTURATION DANS UN SYSTEME DE TELECOMMUNICATIONS

(30) Priority: 10.07.2000 FI 20001640
(43) Date of publication of application: 09.04.2003
(73) Proprietor: TeliaSonera Finland Oyj, 00510 Helsinki (FI)
(72) Inventor: VIHINEN, Seppo, FIN-01260 Vantaa (FI); SAMILA, Seppo, FIN-04320 Tuusula (FI)
(74) Representative: Simmelvuo, Markku
(86) International application number: PCT/FI2001/000659
(87) International publication number: WO 2002/009411

(56) References cited:
- US-A- 5 003 584
- US-A- 5 822 411
- US-A- 5 960 416
- US-B1- 6 259 777

## Description

The present invention relates to telecommunication systems. In particular, the invention relates to a method and system for arranging billing in a telecommunication system.

### BACKGROUND OF THE INVENTION

The number of services provided by mobile telephone operators has considerably increased in the past few years. The convergence of mobile communication networks has enabled the creation of new value added services for mobile subscribers. A value added service of a mobile communication system may be e.g. the barring of different levels of an outgoing or incoming call, versatile call diversion, call waiting service, conference call, advanced communications systems, prepaid services, and separate billing service.

The arranging of charging and billing has been one challenging development area in the operation of operators. Especially one aim has been to offer to the clients of all operators the possibility of choice as regards the attributing of billing. For instance, the charging of specially priced calls and transactions of payment traffic conducted over the mobile station may be attributed to somewhere else than the account of the calling mobile station.

With the operator it is also possible to sign e.g. a 101 long-distance contract. In that case, the subscriber can make calls without a separate long-distance network identifier, and s(he) will be always able to know in what network the dialing takes place. It is, however, not possible to utilize the traditional 101 code in mobile communication systems.

The other call specification 151 is operatorspecific, and does not therefore provide a sufficient additional value to the subscriber, since the service is bound to a specific operator. In both of the aforementioned systems, the subscriber makes a separate contract and uses in conjunction with the dialing the code required by the service.

A pocket subscription is one alternative in wishing to influence the differentiation of billing. The holder of the pocket subscription does not necessarily need a subscription of his/her own, instead s(he) may call via a pocket subscriber number of his or her own that is dialed in the beginning of each call. The system works both in the national and international calls, and the calling is independent of system and operator. The billing is attributed based on the aforementioned personal identification number of the pocket subscription.

The problem with the pocket subscription is the two-phase dialing. Series of numbers consisting of considerably many numbers are regarded cumbersome and long among the users.

A telecard service is one solution that has been designed specially for companies and their employees. Telecard is specially the solution for people travelling on business that enables one to attribute the billing of calls and other telecommunication to the desired billing point. Also in this alternative the subscriber is confronted with the same problems as with the pocket subscription.

Prior art also includes US 5,960,416 which discloses real time subscriber billing at a subscriber location in an unstructured communication network. However, US 5,960,416 also fails to provide solutions to the problems associated with prior art detailed above.

### OBJECTIVE OF THE INVENTION

The objective of the invention is to eliminate the drawbacks referred to above, or at least significantly to alleviate them. One specific objective of the invention is to disclose a new type of method and system that allow one to differentiate the billing of specially priced calls from a normal telephone bill as well as make it possible to offer the specification service of the operator to the clients of several mobile communication systems.

### BRIEF DESCRIPTION OF THE INVENTION

The method in accordance with the invention relates to the arranging of billing in a telecommunication system. In the invention, the billing of specially priced services is differentiated from a normal telephone bill by using a separate identification character string, i.e. a prefix. By means of this identifier it is possible in the method of the invention to attribute the invoice of the subscriber to the appropriate billing point. The telecommunication system comprises a telecommunication system, a terminal device, by which the subscriber is connected to the telecommunication network, and a mobile services switching center which is connected to the telecommunication network. In addition, the system comprises a home location register and a maintenance center which are connected to the mobile services switching center, as well as a service platform which is connected to the telecommunication network.

In the method of the invention, to the telecommunication network, the subscribers dialing is sent that comprises a prefix. The prefix is used to mean a character string beforehand determined and reserved that enables one to show whether the subscriber has got a special service and where one wishes to attribute the billing to. The prefix is selected so that the call is automatically directed to a particular telecommunication network. In conjunction with the call establishing also the identifier of the A subscriber is transmitted. In the method it is checked from the database of the home location register whether the subscriber has the special service in accordance with the aforementioned prefix activated, and certain information of the location of the subscriber and the additional services selected by the subscriber are also checked.

After this, in the method of the invention, the billing method is checked from the database of the maintenance center of the telecommunication system by means of a database query for each user specifically. The maintenance center, which is also called the centralized center of maintenance of the mobile communication network, is responsible for subscriber management, charging, as well as the handling of the error messages coming from the network. The maintenance center transfers the billing to a subscriber-specific billing point based on subscriber-specific definitions.

After the aforementioned measures, in the method of the invention, the subscribers dialing is directed, after number conversion, to the service platform.

In one embodiment of the invention, the bill is divided into two parts. The division is done so that in the first part there is generated the share of the subscription of the normal mobile telephone part, and in the second part there is generated the additional charge part consisting of the special service that is billed via a separate billing system.

In one embodiment of the invention, in conjunction with the call establishment there is transmitted the A subscriber identifier, and in case the sending of the number has been barred, the call establishment is barred.

In addition, the invention relates to a system for arranging billing in a telecommunication system which comprises a telecommunication network, a terminal device, by which the subscriber is connected to telecommunication network, a mobile services switching center, which is connected to the aforementioned telecommunication network, a home location register, which is connected to the aforementioned mobile services switching center, a maintenance center, which is connected to the aforementioned mobile services switching center, and a service platform which is connected to the aforementioned telecommunication network.

According to the invention, the telecommunication system comprises a database checker which is used to check whether the special service defined for the user is activated. In the system in accordance with the invention, a database query component is used to check, for each user specifically, the billing method of the subscriber from the database of the maintenance center, and transferring means are used to transfer the bill, for each user specifically, to a subscriber-specific billing point in accordance with the definitions of the prefix.

The system also comprises a billing generator which enables one to divide the bill into two separate parts so that the first part comprises, according to the definitions, the subscribers share of the mobile communication connection setup, and the second part comprises the additional charge part, e.g. the cost resulting from the additional service, which is directed for billing via a separate system, e.g. to a credit card account.

As compared to prior art, the invention has the advantage that it enables one to differentiate the billing of specially priced calls from a normal telephone bill by means of a separate identifier, i.e. prefix. The client may in this way select where and how s(he) wishes the billing to be implemented. In addition, there is neither the two-phase dialing nor the long series of numbers appearing in the invention.

### BRIEF DESCRIPTION OF THE DRAWINGS

In the following section, the invention will be described by the aid of the attached examples of its embodiments with reference to the accompanying drawing, in which
Fig. 1 schematically represents one embodiment of the system in accordance with the invention, and
Fig. 2 represents one advantageous signaling diagram illustrating the function of the present invention.

### DETAILED DESCRIPTION OF THE INVENTION

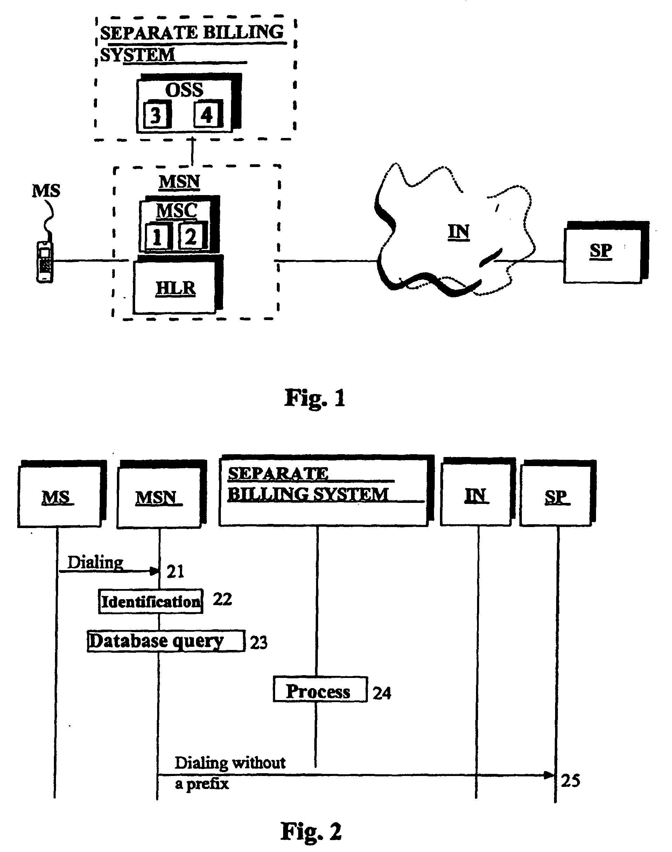

The system as shown in Fig. 1 comprises a telecommunication network (MSN, Mobile Service Network), which in this example is a mobile communication network (PLMN, Public Land Mobile Network), e.g. a digital mobile network. The telecommunication network MSN comprises naturally also other network components than the ones important with regard to the function of the invention shown in Fig 1: the mobile services switching center (MSC, Mobile Service Switching Center) and home location register (HLR, Home Location Register). The system comprises also a terminal device (MS, Mobile Station), which is preferably a mobile station. The mobile stations MS are connected to the telecommunication network MSN e.g. via a radio interface. The system comprises also a separate billing system which comprises a maintenance center (OSS, Operation Sub-System). The separate billing system is connected to the telecommunication network MSN. The system as shown in Fig. 1 comprises also a service platform (SP, Service Provider) which is connected to the telecommunication network MSN, as well as an intelligent network (IN, Intelligent Network).

Further, the system as shown in Fig. 1 comprises a database checker 1 located in the mobile services switching center MSC that is used to check from the home location register HLR whether the subscriber has the special service activated, a database query component 2 which is used to check the billing method of the subscriber from the database of the maintenance center OSS by means of a database query. In addition, the maintenance center OSS of the system as shown in Fig. 1 comprises transferring means 3 which are used to transfer the billing, according to subscriber-specific definitions, to a subscriber-specific billing point.

The maintenance center OSS comprises also a billing generator 4 which is used to divide the bill into two parts so that the billing generator 4 generates in the first part the share of the subscription of the call establishment, and in the second part the additional charge part consisting of the special service that is directed to be billed via a separate system.

In Fig. 1 there is shown also the intelligent network IN. The intelligent network IN is needed in order that the mobile subscriber could be offered new services. The subscriber is attached to the services of the intelligent network IN by a number conversion of the mobile services switching center (MSC). The signaling is consistent with the common channel signaling (SS7, Signaling System number 7), and the communication e.g. between a GSM network and the intelligent network takes place in accordance with the INAP protocol. The INAP protocol utilizes the service elements of applications (ASE, Application Service Elements), and together with the part responsible for the transactions (TCAP, Transaction Capability Application Part) enables the access of the mobile subscriber to the services (Mobile Application Entity) of the intelligent network IN. The intelligent network IN as shown in Fig. 1 may comprise the following components: the signal transfer point (STP, Signaling Transfer Point), service switching point (SSP, Service Switching Point), service control point (SCP, Service Control Point).

The intelligent network IN allows the mobile subscriber to access certain services. The subscriber can e.g. have his or her car washed in a car wash automate. The subscribers dialing is identified in the mobile services switching center (MSC) as being a number of the intelligent network IN, and it is directed, after the number conversion, to the intelligent network IN. The responsibilities of the intelligent network include activating the service desired by the subscriber. In this kind of situation the subscriber may wish to differentiate the billing of the specially priced services from a normal telephone bill.

Fig. 2 represents, by way of example, one advantageous signaling diagram illustrating the function of the present invention. According to Fig. 2, the subscribers dialing, which contains the A subscriber identifier (A-id), is sent from the mobile station MS to the telecommunication network MSN, arrow 21. The dialing may comprise an identifier in accordance with at least two different character strings that is used to indicate, for each subscriber specifically, how and where the subscriber is billed and to which telecommunication network MSN one wishes the call to be automatically directed. The telecommunication network MSN identifies the subscribers dialing, process 22. In the identification process 22, the database checker 1 of the mobile services switching center MSC is used to check, based on the MAP protocol, from the home location register HLR whether the sub-scriber is having a special service. After this, the database query component 2 of the mobile services switching center MSC is used to check, by means of a database query, the subscribers billing method from the database of the separate billing system, process 23. The database query is e.g. a database query consistent with SQL (SQL, Structured Query Language). The SQL is a common database query language using which it is possible to make entries and queries e.g. to the databases of the network components of the mobile communication systems. In the subscriber-specific process of generating the bill 24 of the separate billing system, the following facts are checked: whether the whole bill is debited via the separate billing system or whether the bill is divided into two parts. If the bill is divided into two parts, then in the first part there will be the subscribers share of the call establishment, and in the second part there will be the share consisting of the special service that is debited via the separate billing system. This second part may be attributed, for each subscriber specifically, e.g. to the billing point of a credit card.

After this, the subscribers dialing is directed without the prefix, based on the C number received from the number conversion, via the intelligent network IN, to the service platform SP, arrow 25.

The invention is not restricted merely to examples of its embodiments, instead many variations are possible within the scope of the inventive idea.

## Claims

1. A method for arranging billing in a telecommunication system, which method comprises the steps of:
sending dialing containing a subscribers prefix to a telecommunication network (MSN); and
making a number conversion to the dialing and directing the aforementioned converted dialing to a service platform (SP), **characterized in that** the method further comprises the steps of:
selecting the prefix so that the call is automatically directed to a given telecommunication network (MSN);
checking whether the subscriber has got a special service activated; and
directing the billing, based on subscriber-specific definitions, to a subscriber-specific billing point in order to divide a bill into parts, the parts to be billed in different ways.

2. The method according to claim 1, **characterized in that** the bill is divided into two parts so that in the first part there is generated the subscriptions share of the call establishment, and in the second part the additional charge part consisting of an additional service that is billed via a separate billing system.

3. The method according to claim 1 or 2, **characterized in that** the prefix is a predetermined character string consisting of a digit or a combination of digits.

4. The method according to claim 1, 2 or 3, **characterized in that** in conjunction with the call establishment there is transmitted a calling subscriber identifier.

5. The method according to claim 1, 2, 3 or 4, **characterized in that** in case the sending of the number has been barred, the call establishment is barred.

6. A system for arranging billing in a telecommunication system, which system comprises:
a telecommunication network (MSN);
a terminal device (MS) by which a subscriber is connected to the aforementioned telecommunication network (MSN);
a mobile services switching center (MSC) which is connected to the aforementioned telecommunication network (MSN);
a home location register (HLR) which is connected to the aforementioned mobile services switching center (MSC);
a maintenance center (OSS) which is connected to the aforementioned mobile services switching center (MSC); and
a service platform (SP) which is connected to the aforementioned telecommunication network (MSN);
**characterized in that** the system comprises:
a database checker (1) which is used to check whether a special service defined for the subscriber is activated;
a database query component (2) which is used to check the billing mode of the subscriber for each subscriber specifically;
transferring means (3) which are used to transfer the billing, according to subscriber-specific definitions, to a subscriber-specific billing point; and
a billing generator (4) which is used to divide a bill into parts, the parts to be billed in different ways.

7. The system according to claim 6, **characterized in that** the billing generator (4) is arranged to divide the bill into two parts so that in the first part there is generated the share of the subscription of the call establishment and in the second part the additional charge part consisting of an additional service that is billed via a separate billing system.

## Patentansprüche

1. Verfahren zum Organisieren der Gebührenerfassung in einem Telekommunikationssystem, wobei das Verfahren die Schritte aufweist:
- Senden von Wählinformationen, welche eine Vorwahl eines Teilnehmers beinhalten, an ein Telekommunikationsnetzwerk (MSN); und
- Durchführen einer Nummernumwandlung an den Wählinformationen und Lenken der zuvor genannten umgewandelten Wählinformationen an eine Serviceplattform (SP),
**dadurch gekennzeichnet,**
**dass** das Verfahren ferner die Schritte aufweist:
- Auswählen der Vorwahl, sodass der Anruf automatisch an ein vorhandenes Kommunikationsnetzwerk (MSN) geleitet wird;
- Überprüfen, ob der Teilnehmer einen besonderen Service aktiviert hat; und
- basierend auf Teilnehmer-spezifischen Definitionen, Leiten der Gebührenerfassung an einen Teilnehmer-spezifischen Gebührenerfassungspunkt zum Aufteilen einer Rechnung in Teile, wobei die Teile auf verschiedene Weise in Rechnung gestellt werden.

2. Verfahren nach Anspruch 1,
**dadurch gekennzeichnet,**
**dass** die Rechnung in zwei Teile aufgeteilt wird, sodass in dem ersten Teil der Teilnehmergebührenanteil des Verbindungsaufbaus und in dem zweiten Teil der zusätzliche Gebührenteil, welcher aus einem zusätzlichen Service besteht, der über ein getrenntes Abrechnungssystem in Rechnung gestellt wird, erzeugt wird.

3. Verfahren nach Anspruch 1 oder 2,
**dadurch gekennzeichnet,**
**dass** in der Vorwahl eine vorbestimmte Zeichenkette, die aus einer Ziffer oder einer Kombination von Ziffern besteht, ist.

4. Verfahren nach Anspruch 1, 2 oder 3,
**dadurch gekennzeichnet,**
**dass** zusammen mit dem Verbindungsaufbau eine Anruferteilnehmerkennung übertragen wird.

5. Verfahren nach Anspruch 1, 2, 3 oder 4,
**dadurch gekennzeichnet,**
**dass** der Verbindungsaufbau gesperrt wird, falls das Versenden der Nummer gesperrt wurde.

6. System zur Organisation einer Gebührenerfassung in einem Telekommunikationssystem, wobei das System aufweist:
- ein Telekommunikationsnetzwerk (MSN);
- eine Endgeräteinrichtung (MS), durch die ein Teilnehmer an das zuvor genannte Telekommunikationsnetzwerk (MSN) verbunden ist;
- eine Vermittlungsstelle für Mobilfunkservices (MSC), welche mit dem zuvor genannten Telekommunikationsnetzwerk (MSN) verbunden ist;
- ein Heimstandortregister (HLR), das mit der zuvor genannten Vermittlungsstelle für Mobilfunkservices (MSC) verbunden ist;
- eine Wartungszentrale (OSS), die mit der zuvor genannten Vermittlungsstelle für Mobilfunkservices (MSC) verbunden ist; und
- eine Serviceplattform (SP), die mit dem zuvor genannten Telekommunikationsnetzwerk (MSN) verbunden ist;
**dadurch gekennzeichnet,**
**dass** das System aufweist:
eine Datenbankprüfungseinrichtung (1) zum Überprüfen, ob ein für den Teilnehmer definierter besonderer Service aktiviert ist;
- eine Datenbankanfrageeinheit (2), welche zum Überprüfen des Gebührenerfassungsmodus des Teilnehmers insbesondere für jeden einzelnen Teilnehmer verwendet wird;
- Übertragungsmittel (3), welche verwendet werden, um die Gebührenerfassung gemäß den Teilnehmer-spezifischen Definitionen an einen Teilnehmer-spezifischen Gebührenerfassungspunkt zu übermitteln; und
- einen Rechnungserzeuger (4), der verwendet wird, um eine Rechnung in Teile aufzuteilen, wobei die Teile auf verschiedene Weise in Rechnung gestellt werden.

7. System nach Anspruch 6,
**dadurch gekennzeichnet,**
**dass** der Rechnungserzeuger (4) so eingestellt ist, dass die Rechnung in zwei Teile aufgeteilt wird, wobei in dem ersten Teil der Anteil der Teilnehmergebühren des Anrufaufbaus und in dem zweiten Teil der zusätzliche Gebührenteil, welcher aus einem zusätzlichen Service besteht, welcher über ein getrenntes Rechnungslegungssystem in Rechnung gestellt wird, erzeugt wird.

## Revendications

1. Procédé d'organisation de facturation dans un système de télécommunications, lequel procédé comprend les étapes pour :
envoyer une numérotation contenant un préfixe d'abonnés à un réseau de télécommunications (MSN) ; et
réaliser une conversion du numéro à la numérotation et diriger la numérotation convertie susmentionnée vers une plate-forme de service (SP), **caractérisé en ce que** le procédé comprend en outre les étapes pour :
sélectionner le préfixe de sorte que l'appel soit automatiquement dirigé vers un réseau de télécommunications donné (MSN) ;
vérifier si l'abonné a activé un service spécial ; et diriger la facturation, basée sur des définitions spécifiques à l'abonné, vers un point de facturation spécifique à l'abonné afin de diviser une facture en parties, les parties devant être facturées de différentes façons.

2. Procédé selon la revendication 1, **caractérisé en ce que** la facture est divisée en deux parties de sorte que dans la première partie, soit générée la part d'abonnement de l'établissement d'appels et dans la seconde partie la part de frais supplémentaire consistant en un service supplémentaire qui est facturé via un système de facturation distinct.

3. Procédé selon la revendication 1 ou 2, **caractérisé en ce que** le préfixe est une chaîne de caractères prédéfinie consistant en un chiffre ou une combinaison de chiffres.

4. Procédé selon la revendication 1, 2 ou 3, **caractérisé en ce que** conjointement avec l'établissement d'appels soit transmis un identifiant de l'abonné qui appelle.

5. Procédé selon la revendication 1, 2, 3 ou 4,
**caractérisé en ce que** si l'envoi du numéro a été annulé, l'établissement d'appels est annulé.

6. Système d'organisation de facturation dans un système de télécommunications, lequel système comprend :
un réseau de télécommunications (MSN) ;
un dispositif terminal (MS) par lequel l'abonné est connecté au réseau de télécommunications susmentionné (MSN) ;
un centre de commutation de services mobiles (MSC) qui est connecté au réseau de télécommunications susmentionné (MSN) ;
un registre des abonnés nominaux (HLR) qui est connecté au centre de commutation de services mobiles susmentionné (MSC) ;
un centre de maintenance (OSS) qui est connecté au centre de commutation de services mobiles susmentionné (MSC) ; et
une plate-forme de services (SP) qui est connectée au réseau de télécommunications (MSN) susmentionné ;
**caractérisé en ce que** le système comprend :
un contrôleur de base de données (1) qui est utilisé pour vérifier si un service spécial défini pour l'abonné est activé ;
un composant de requête de base de données (2) qui est utilisé pour vérifier le mode de facturation de l'abonné pour chaque abonné spécifiquement ;
des moyens de transfert (3) qui sont utilisés pour transférer la facturation, selon les définitions spécifiques à l'abonné, à un point de facturation spécifique à l'abonné ; et
un générateur de facturation (4) qui est utilisé pour diviser une facture en parties, les parties devant être facturées de différentes façons.

7. Système selon la revendication 6, **caractérisé en ce que** le générateur de facturation (4) est agencé pour diviser la facture en deux parties de sorte que dans la première partie soit générée la part d'abonnement de l'établissement d'appels et dans la seconde partie la part de frais supplémentaire consistant en un service supplémentaire qui est facturé via un système de facturation distinct.
